# EUROPÄISCHE PATENTANMELDUNG

(11) **EP 2 072 086 A2**
(43) Veröffentlichungstag der Anmeldung: **24.06.2009**
(21) Anmeldenummer: 08015114.5
(22) Anmeldetag: 27.08.2008
(51) Int. Cl.: A62C 2/06, F16L 55/10, H02G 3/04, H02G 3/22

(54) **Klimaschutzvorrichtung für CO2 Reduktion mit Kondensationskatalysator**

(30) Priorität: 27.08.2007 DE 102007040595
(71) Anmelder: Caruso, Julia, 57230 Roppeviller (FR); Caruso, Anton Angelo, 57230 Roppeviler (FR); Caruso, Robinson Thomas, 57230 Roppeviller (FR)
(72) Erfinder: Caruso, Anton Angelo, 57230 Roppeviller (FR)

(57) **Zusammenfassung**

Seit mehr als über 100 Jahre werden Warmwasserheizungen nach gleichem Funktionsprinzip hergestellt und betrieben. Das Einbeziehen des Rauchgasabzugs zum wichtigsten Funktionselement und Multifunktion, ist die wesentlichste Innovation seit Warmwasserheizungen bekannt sind. Das Einbinden des Rauchgasabzuges als Wärmetauscherfläche bietet die Möglichkeit das gesamte Wärmepotential des eingesetzten Brennstoffes zu nutzen und durch reduzierten Brennstoffverbrauch den CO²-Ausstoß bis zu 50% zu verringern. Die besondere Bauweise macht den Einsatz von Rauchgaswäsche und Rußfilter möglich und die Kühlung des thermisch entkoppelten Mündungsstücks mit Kühlflüssigkeitsummantelung zur maschinellen Abkühlung der Rauchgase zwecks Nachkondensation und der damit bewirkten Schadstoffreduktion sowie Vorbereitung zu CO² -Verflüssigung und Abfüllung. Herkömmliche Schornsteine verursachen Umweltverschmutzung und Wärmevergeudung, weil sie zum Schutze Ihrer Substanz warmgehalten werden müssen um Versottung und der damit verbundenen Unbrauchbarkeit zu vermeiden.

## Beschreibung

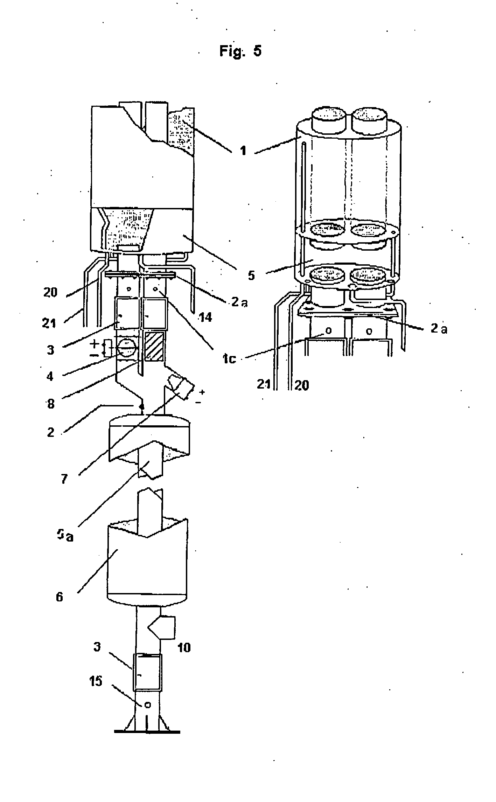

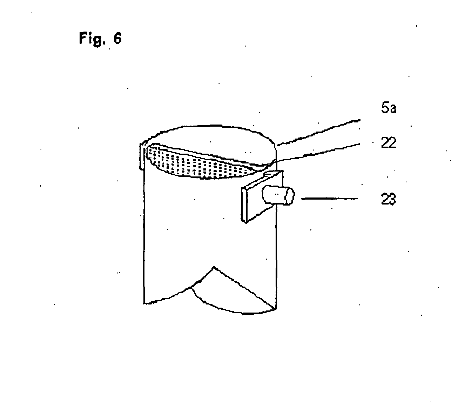

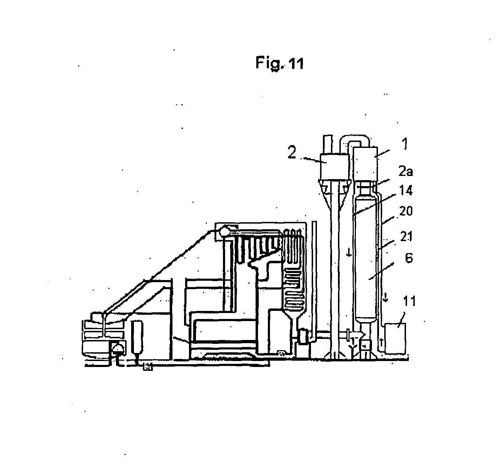

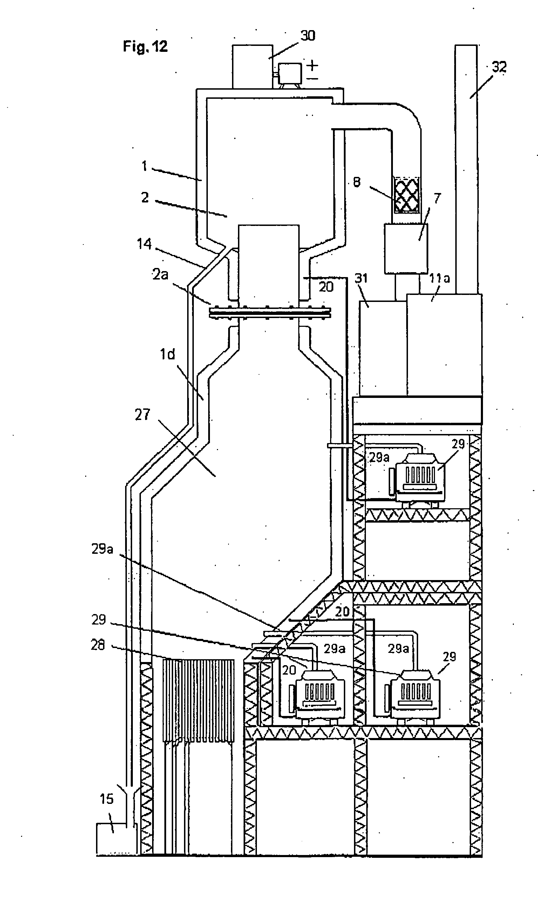

Energie-Einsparungen durch Wärmerückgewinnung und Reduktion von CO² Ausstoß zu verwirklichen oder zu vermeiden, bei Industrieanlagen, Heizungen jeder Art von Gebäuden sowie Kohlekraftwerke, Abfackelanlagen udgl,. zu reduzieren und zu vermeiden und die gewonnene Wärme nutzbar zu machen sowie bei Zuschaltung der CO2-Verfüssigungstechnik den CO²-Ausstoß zu verhindern, durch die maschinelle Vorkühlung im Mündungsstück zur Vorbereitung der Verflüssigung der CO² Anteile mit integrierter Verflüssigungsanlage Fig. 11, Fig. 12,
- die Vermeidung der Luftbelastung mit Feinstaub, Russanteile und anderweitige staubähnliche Anteile sowie Vermeidung allgemeiner Schadstoffbefastungen aus Verbrennungen jeder Art durch jeder Art Feuerstätten und Verbrennungsmotoren. Fig. 5, Fig.6.

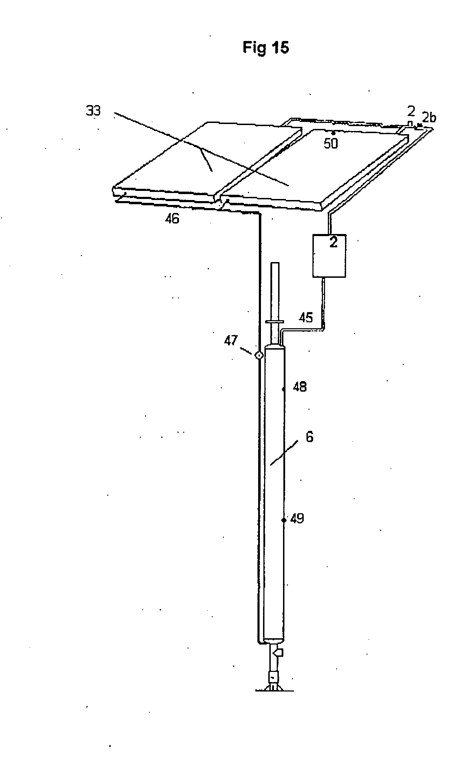

Ein weiterer Zweck welcher der Erfindung zugrunde liegt, ist Raumkühlung unter Verwendung der vorhandenen Heizflächen als Kühlflächen mittels des Wassers im Mantelrohr als Kühlflüssigkeit und Kälteerzeugung durch Verdunstungen, Fg.13
- die Leistung der Solarkollektoren durch Leerlaufsystem zu optimieren bei gleichzeitiger Einsparung von Anschaffungskosten sowie Sonnewärme und sonstige Wärme als Energie für Absorberkältemaschinen zu nutzen, Fig. 15.

Der zugrunde liegende Zweck der Erfindung wird weiterhin dadurch bewirkt, indem der Rauchgasabzug zum wichtigstes Funktionselement der Warmwasserheizungen als Energieträger mit Multifunktion einbezogen wird. Die Erfindung beinhaltet die Warmwasserbereitung, Speicherfunktion, Steigstränge, Heizungsverteilung, hydraulische Weiche, Medium für Solarwärmespeicherung, optimale Schadstoff- und CO² Reduktion und Wärmerückgewinnung durch permanente Brennwertnutzung in dem als Kondensationskatalysator ausgelegten ummantelten Rauchrohr. Mehrfachbelegung mit Verteilung der Wärme von Kachelöfen resp. Ofen jeder Art als Heizkessel, Anschlussmuffen zur Aufnahme von Elektroheizpatronen.

Die Erfindung erfüllt den Zweck Klimaschutz und allgemeinen Umweltschutz zu bewirken durch integrierte Russfilter, Fig. 5 Ziff. 8 und hydraulischer Rauchgaswäsche, Fig. 6 sowie CO² Verflüssigungsanlagen mit Abfüllvorrichtung auf Plattform in Nähe des maschinell gekühlten Mündungsstücks zur Vermeidung von CO² Ausstoßes. Fig.9, Fig. 10. Zweck der Erfindung ist auch die CO²-Ausstoßverminderung durch Brennstoffeinsparung bis zu 50% bereits ohne Betrieb von CO²-Verflüssigungsanlagen, wodurch CO₂ - Ausstoß vermieden wird.

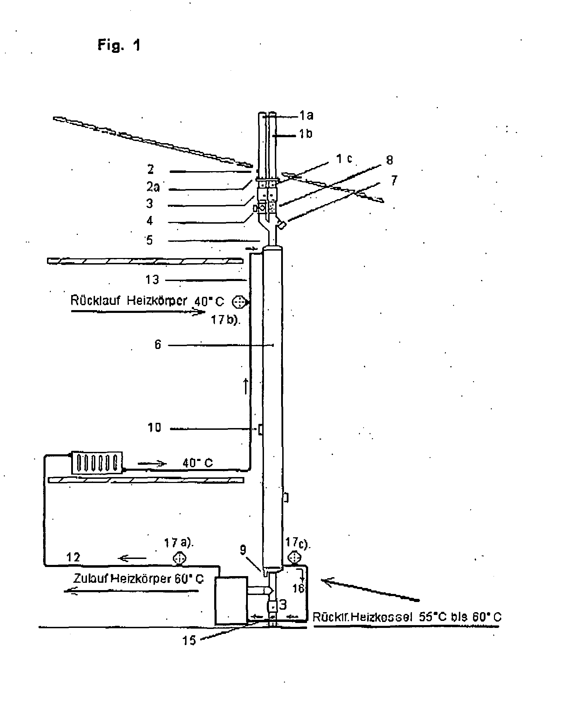

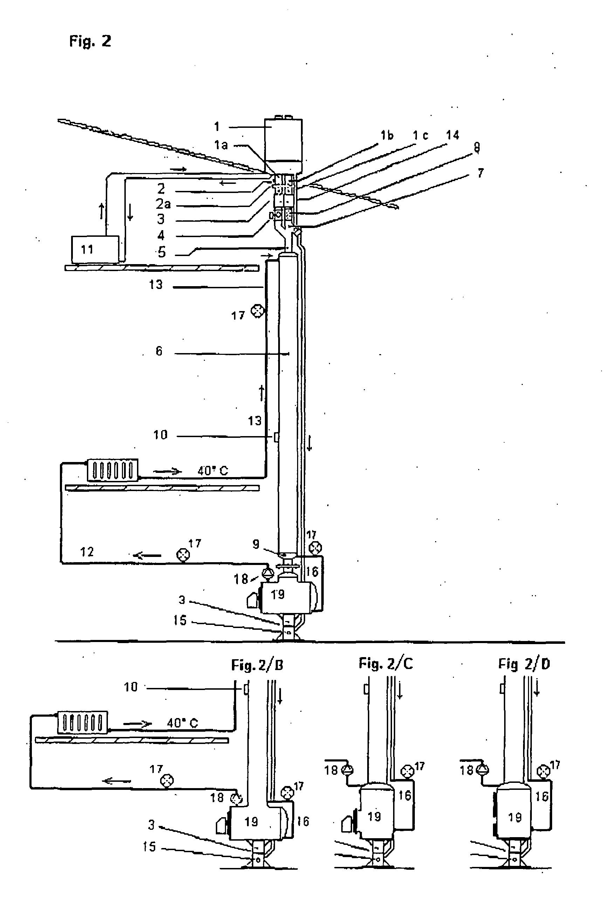

Dieser weitere Zweck der Erfindung wird bewirkt, indem die heißen Rauchgase beim Durchströmen des Wasser ummantelten Rauchrohres als Heizfläche, Fig. 1 Ziffer 6, ihre Wärme an das Wasser des umhüllenden Wassermantelrohres abgeben. Bei diesem Vorgang kühlen die Rauchgase ab. Parallel dazu wird das auf 38° C bis 40° C abgekühlte Rücklaufwasser aus den Heizkörpern in die oberste Stelle des Wassermantels im Gegenstromverfahren eingeführt, Fig. 1, Ziffer 13. Die Rauchgase die den größten Teil ihres Wärmepotentials beim Erreichen der oberen Stelle des Rauchrohrs innerhalb des Wassermantels bereits auf das Wasser übertragen haben, erfahren durch das Einströmen des abgekühlten Rücklaufwassers, Fig. 1, Ziff.13, von ca. 38° C bis 40° C eine weitere Abkühlung auf unter 54° bis 57° C, dem Taupunkt, mit dem die Kondensation der kondensierfähigen Stoffe der Rauchgase eintritt und somit Kondensationswärme im Bereich des oberen Fünftels im Wassermantels sowie die Rauchgaswärme wirksam wird und das Rücklaufwasser zum Heizkessel mit 55 bis 65 % und teils mehr, je nach Befeuerung und Heizungsauslegung, dem Heizkessel zugeführt wird, Fig 1, Ziffern 17 a).b).c). Fig, 2, Ziffer17, Fig.2/ B, Fig.2/C, Fig.2/D.

Durch das Einbinden der Solarkollektoren mit Leerlaufsystem, wird der Umweg der Wärmeübertragung auf den Wärmeträger Wasser mittel Wärmetauscher überflüssig. Dadurch wird eine höhere Effizienz erreicht bei gleichzeitiger Anschaffungskosteneinsparung, Fig. 15.

### Weitere Ausgestaltung der Erfindung und Funktionsweise

Der Kachelofen resp. jede Festbrennstoff-Feuerstätte übernimmt bei Anwendung der Erfindung die Aufgabe des Heizkessels, sämtliche Heizflächen werden ebenso mit warmen Heizwasser versorgt, wie bei Heizkesselbetrieb. Gleich mit welcher Energie das Heizwasser im Mantelrohr erwärmt wird, funktioniert das gesamte Heizsystem einschließlich der Warmwasserbereitung. Festbrennstoff-Öfen müssen mindest eine Leistung von 50% des Gesarntwärmebedarfs aufweisen, wobei die Wärme der Feuerstätte im so genannten kurzen Zug vom Brennraum direkt in das System Klimaschutzvorrichtung geleitet wird. Weitere 50% werden den Rauchgasen für Nutzzwecke entzogen.

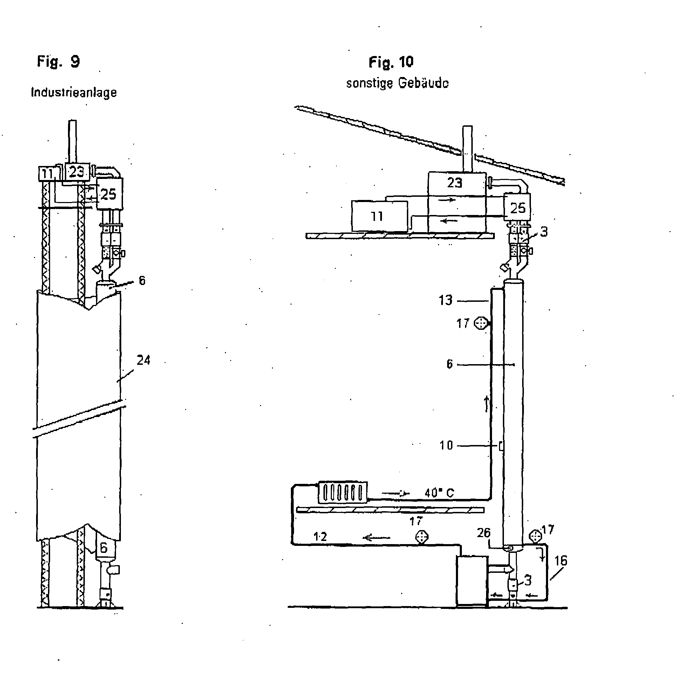

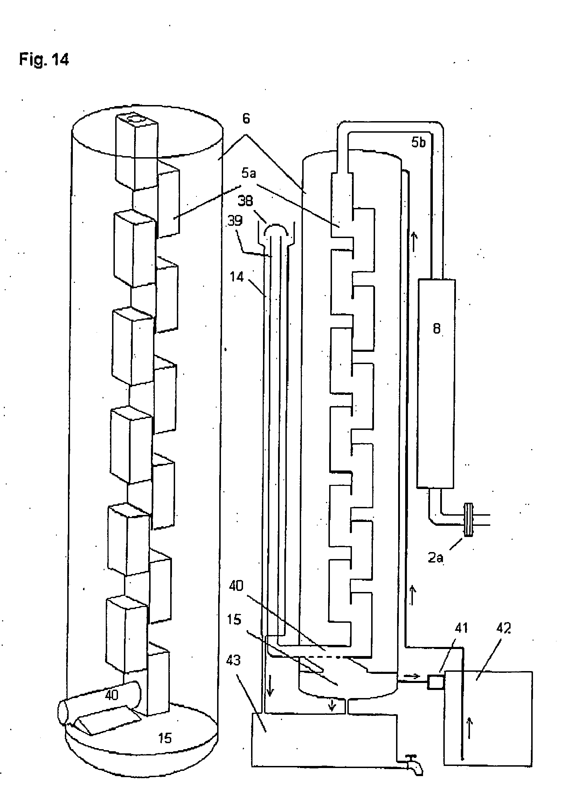

Die integrierten Feuerstätten können horizontal oder vertikal angeordnet sein sowie mit Flansch oder Steckverbindung betrieben werden und die Mündungsstücke können, ohne oder mit Kühlummantelung ausgestattet sein, wobei die Kühlung ohne Ummantelung thermisch erfolg, Fig.1, Ziff. 1a, und 1 b. Mit Ummantelung durch maschinelle Kühlung mit Absorberkältemaschine Fig.2, Fig.3, Fig.4. Durch maschineller Kühlung wird dem Betrieb der Anlage in warmer Jahreszeit Rechnung getragen bei Betreibern, die auch im Sommer Wärme erzeugen aufgrund von für Produktionsabläufen. Die maschinelle Kühlung dient für Kondensation und der Vorkühlung und stellt die zur Verflüssigung der CO²-Anteile erforderliche Kälte zur Verfügung, wobei die in der warmen Jahreszeit überflüssige Wärme zur Produktion von Verdunstungskälte durch Absorberkältemaschinen genutzt wird.Fig.9, Fig 10. Die Gesamtanlage bildet somit eine Einheit aus Heizkessel/Wärmeerzeuger und Rauchgasabzug mit Warmerückgewinnung und Schadstoffreduktion. Das trifft auch auf Abfackelanlagen zu, Fig. 12 ,.sowie auf jeder Art von Verbrennungsmotoren für jeder Art Einsatz mit jeder Art Kraftstoff, wobei für Verbrennungsmotoren spezielle Vorrichtungen in das Abgassystem eingebracht sind, die je nach Art des Verbrennungsmotors deren Abgasdruck Rechnung tragen, Fig. 14.

Durch die Anordnung von Rauchgasrohr, Wassermantel als Pufferspeicher, thermische Trennung mit thermisch oder maschinell gekühlten Mündungsstück zur effektiven Nachkondensation mit Bindung resp. Entsorgung der Schadstoffe durch Kondensatauffang und -ablauf und integrierter Heizkessel im unterem Teil zu einer Einheit, erfolgt optimale Nutzung der Abgas-und Verbrennungswärme unter Einbezug der bei der Abkühlung unter dem Taupunkt entstehenden Kondensationsresp. Latentwärme, wobei die auf den Pufferspeicher übertragene Wärme gleichzeitig die Warmwasserbereitung im Durchflusserhitzungsverfahren durch die im Wassermantel intergrierten Röhrenbündelwärmetauscher bewirkt und bei entsprechender Jahreszeit durch angeschlossenen thermischen Solarkollektoren einschließlich die Heizungsunterstützung. Es entfallen darüber hinaus Leitungsverluste durch Wergfall von Steigleitungen udgl..

Durch die mit dieser Technik gegebenen Möglichkeit des Integrierens einer Vorrichtung mit Druck- oder Sauggebläse für Russfilter im Mündungsstück, Fig.5 Ziff.7, kann durch die Erfindung bei Heizungen effektiv die Feinstaubbelastung vermieden oder zumindest stark reduziert werden, wie bereits zur Zeit beim Verbrennungsmotor im mobilen Einsatz.

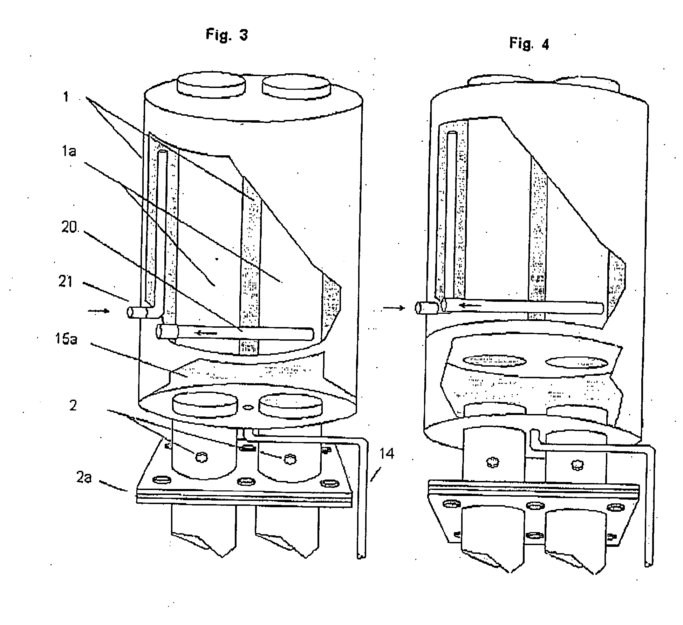

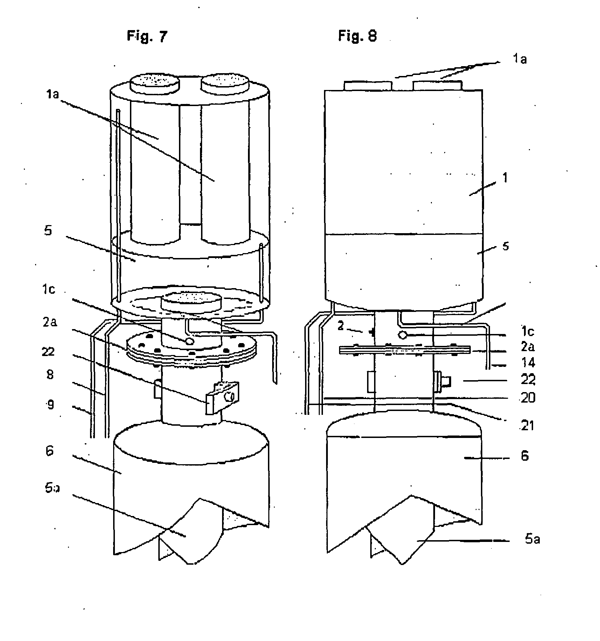

Die thermische Entkopplung wird mittels Ringscheibe aus geeigneten, nicht leitenden, feuerhitze- und säurefestem Material zwischen zwei Flansche bewirkt. Fig 7 u. 8, Ziff.6. Die Schadstoffreduktion erfolgt in der Kondensationskammer, Fig. 5, mit Kondesatablauf und an Kühlflächen der kühlflüssigkeistummantelten Rauchrohre über der Kondensationskammer, Fig.3,Ziff.1. u. Fig.3, Ziff.5. im thermisch entkoppelten Mündungsstück mit Kondensateinlauf in die mit Kondensatauffang und Ablauf ausgestattete Kondensationskammer, Fig.3 u. 4, Zif. 5. Die beiden Rauchrohre, welche durch die Ummantelung der Kühlflüssigkeit im Mündungsstück führen, sind versetzt zu dem in die Kondensationskammer von unten her eingeführten Rauchrohr angeordnet, damit das entstehende Kondensat in beiden Rauchrohren über der Kondensationskammer auf den konischen Boden der Kondensationskammer, Fig.8 Ziff.3 u.Fig 9, läuft, nicht aber in das Rauchrohr, welches von unten her in die Kondensationskammer ragt. Fig 7, Ziff.1,2,3. Das betrifft auch auf System hydraulische Rauchgaswäsche sowie dem Rußfiltersystem, wobei bei Letzterem zwei Rauchrohre von untenher versetzt in die Kondensatiinskammer ragen. Fig. 5. Das Kondesat der Kondensationkammer sowie der darüberliegenden Rauchrohre läuft somit gemeinsam in den oberen Kondensatablauf von dort zum unteren Kondensatauffang, Fig.2, Ziff.15 , somit zur Entsorgung. Die Kondensation, die im thermisch entkoppelten Mündungsstück erfolgt, dient der Schadstoffreduktion. Dieserhalb wird diese Technik insbesondere im Industriebereich zur Anwendung kommen, die auch in der warmen Jahreszeit Wärme zur Folge von Herstellungsprozessen erzeugen. Die maschinelle Kühlung erfolgt mit Absorberkältemaschinen, wobei überflüssige Wärme bei Industrieanlagen die Energie für die Absorberkältemaschinen liefern und die Abkühlung der Rauchgase zur Vorbereitung der Verflüssigung bereits bis auf Temperaturen unter dem Gefrierpunkt erfolgt, um in der Verflüssgsungsanlage weiter bis mindest unter 70° C abzukühlen und diese unter Druck in entsprechende Behältnisse abgefüllt werden können. Bei stationären Verbrennungsmotoren wird in ähnlicher Weise verfahren sowie bei großen Wasserfahrzeugen. Fig.3, Fig.u..4, Fig.5 und Fig.15.

Die erfindungsgerechte Vorrichtung zu diesem Zwecke ist das thermisch entkoppeltes Mündungsstück mit zwei oder mehreren Rauchgasrohrstücken und einem Nebenluftstutzen zur Aufnahme , eines Druckventilators, Fig, 5. Zif. 12 , der auf eine Fotozelle, Fig.5 Zif. 11,reagiert, wie diese auch zur Gefahrenabwandung von Staubexptosionsgefahr z.B. auch in Bergwerken, eingesetzt werden. Fig. 5 , Zif. 11. Die beiden erforderlichen Rauchrohre der Vorrichtung haben ein gemeinsames Hauptrauchrohr, in welchem sich die Fotozelle befindet, Fig.5 Zif 11. Eine motorische Rauchgasklappe befindet sich im Rauchrohr ohne Filter, durch das die Rauchgase ohne Staubanfall durch thermischen Auftrieb abziehen, Fig 5 Ziffer 9. Meldet die Fotozelle Staubanfall, z.b. beim Anfahren einer weiteren Festbrennstoff-Feuorstätte, wird von ihr gleichzeitig mit dem Ventilator die motorische Rauchgasklappe angesteuert. Diese schließt sich. Die Rauchgase werden zum geraten Weg durch den Filter gezwungen mit Hilfe des sich in betriebsetzenden Druckgebläseventilators, Fig,. 5 Zif. 12, bewirkt durch die Meldung der Fotozelle.

Die Vorrichtung für hydraulische Rauchgaswäsche, alternativ zum Feinstaubfilter oder mit diesen bei Erfordernis gekoppelt, bestehend aus einer Spritzdüseneinheit, welche sich im Rauchrohr quer in auswechselbarer Form in einer Halterung im Rauchrohrende, das in die Kondensationskammer führt, befindet. Fig. 6. Ziff. 1, 2, 3 ., Fig. 7, Ziff.1,2,3.

Bei hydraulisxcher Abgaswäsche kann i.d.R. eine Anlage mit einem Rauchrohr Anwendung finden, wobei die Schadstoffreduktion teils im Rauchrohr unterhalb des Flansches für thermischer Entkoppelung, Fig. 7 und Fig. 8, Ziff. 6, im Rauchrohr erfolgt, durch die Übertragung der Rauchgaswärme auf das Wasser im Wassermantelrohr, Fig. 7 und 8, Ziffer 10 und 11. Eine effektive Nachkondensation wird durch die Anordnung des Rauchgasabzuges nach dem Flansch in den beiden Rauchrohr-Endstücken bewirkt, welche durch eine Kühlflüssigkeit geführt werden, Fig.7 und Fig 8, Ziff. 1 und 2, wobei das Kondensat in die Kondensatkammer Fig. 7. und Fig.8, Ziff.3, aufgefangen und über den Kondensatablauf, Fig. 7 und Fig. 8 Ziff. 4, zum unterem Kondensatauffang resp. Kondensatabnahme, geleitet wird, der sich am Fußstück der Anlage befindet. Fig. 2, Ziffer 16. Das Magnetventil im Druckwasseranschluss-Stück. Fig. 6, Zif.3 reagiert auf Meldung der Fotozelle im Rauchrohr über dem Flansch, Fig.5. Ziff.11 für thermische Entkoppelung, bei Ruß- resp. Feinstaubanfall ab bestimmter Dichte. Für Gebäude jeder Art, die beheizt werden, Industrieanlagen, Abfackelanlagen, Verbrennungsmotoren jeder Art für motorbetriebene oder motorbetriebene und zu beheizende Fahrzeuge zu Wasser. Luft, oder Land. Bei Verbrennungsmotoren ist die Abgasführung mit Schalldämmung und Ausstosverzügeren in Rechteck- oder Viereckedelstahlrohr ausgelegt. Vertikale Anordung für Blockheizkraftwerke und Lkw, Fig 15, bei Pkw horizondale Anordnung. Bei vertikaler Anordnung werden die Auspuffgase im Rechteckrohr von oben nach untem durch den Wassermantel geführt, welches dem Abgas aus versetzt eingeschweißten Rechteckrohrteilen den iden Abgasdruck vermindert zur optimalen Wärmeübertragung und entstehendes Kondensat. Vom Kondensatauffang, Fig.15 Ziiff. 10, laufende Kondensat sammelt sich im Kondensatbehälter, Ziff 12. Durch den verbleibenden Abgasdruck könnte Kondensat mit dem Auspuff ins Freie gelangen. Um das zu vermeiden, besteht das Auspuffendstück aus einem Doppelrohr, Fig. 15 Ziff.8 u.9. Das Äußere umfasst das Auspuffrohr an dessen Ausgang sich eine Prallkappe befindet, mit der die Abgase in das umgebende Dopppelrohr gedrückt
wird und damt das Kondensat innen am Doppelrohr seinen Weg nach unter nimmt, ohne dort den Abgasdruck ausgesetzt zu sein, während die durch die Prallkappe umgelenkten Abgase aus dem Doppelrohr nach oben abziehen können. Fig 15 Ziff.7,8,9, 12. Zwischen Motorausgang und Eintritt des Abgasrohres in den wasserummantelten Rechteckrohr, befindet sich der Flansch mit thermischer Entkoppelung, Fig.15, Ziff. 13, zur Vermeidung der Wärmeübertragung von Motor- und Auspuffwärme auf das rauchgasführende Rechteckrohr, Fig 15, Ziff. 2, im Kühlwassermantel., Fig. 15, Ziff. 1. Dieser wird durch den Kühler Fig 16 Ziff. 6 gekühlt. Nach dem Flansch befindet sich der Rußfilter im Abgasrohr zwischen Flansch und Eintritt in den Kühlwassermantel., Fig 15 Ziff 4.

Mit der Erfindung können Heizungen permanent im Bereich der Brennwerttechnik resp, Kondensationswärmenutzung betrieben werden mit jeder Art herkömmlicher Ofen oder Heizkessel ohne daß das für die Abkühlung der Rauchgase bestimmte Wasser des Mantelrohres im oberem Bereich
des Heizwasser-Rücklaufes zu warm wird um die Rauchgastemperatur unter 54 ° C zu kühlen. Das wird erreicht wegen der mit vorliegender Erfindung vorhandenen größeren Wassermenge für die Wärmeübertragung, insbesondere aber wegen der Anordnung des Rücklaufes, der im Gegenstromverfahren wird bewirkt, daß der thermische Auftrieb der Wärme verhindert resp umgedreht und mit dem durch die Heizungsumwälzpumpe erzeugten Wasserstrom zum unterem Ausgang des Mantelrohres in den Heizkessel geführt oder bei Ofenheizung am unterm Anschluß der Klimaschutzvorrichtung wieder eingeführt wird.resp. als bereits aufgeheiztes Rücklaufheizwasser einfließt, Fig. 2 Fig.1, Fig 11.

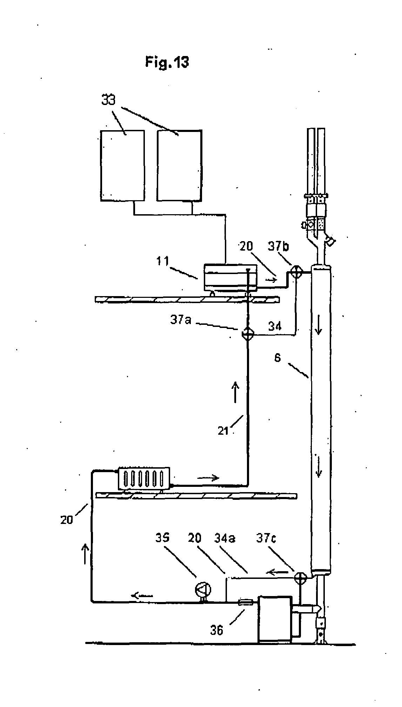

Die Klimaschutzvorrichtung ist bei Einsatz für Abfackelanlagen mit einer Komplettummantelung versehen. Das betrifft auch die thermisch entkoppelte Kondensationskammer Fig.13.Ziff.1. welche die Mündung seperat kühlt. Der Kühlflüssigkeitskreis für die Kondensationskammcr und Vorkühler zur CO² Verlüssigung, Fig 13, Ziff.1, ist ein gesonderter Kühlflüssigkeitskreislauf, Fig.13,Ziff.2, für niedrigere Temperatur.Die Gesamtkühlung erfolgt in drei Stufen, erstens : Abkühlung der Flamme bis zum Verlusst des größten Wärmepotentials im Flammenraum, Fig.13.Ziff.5 durch Kühlmantel Fig.13,Ziff.4, der sich bis zum Übergang zum Flammenrohr und letztendlich als Rauchrohr, Fig.13, Zff.5, zu Ziff.5a, verjüngt, wobei die Kältemaschine, Fig. 13 Zif. 7, die Kühlflüssigkeit im Kühlmantel in hohem Minusgradbereich durch das Kühlsystem schickt resp. das die Abgase beim Erreichen der Kondensationskammer Fig. 13 Zif.1, derart abgekühlt sind, daß der zweite Kühlkreis mit hoher Minusgradtemperatur die Voraussetzung zur effektiven weiteren Abkühlung der mit dem Saugventilator, Fig.13, Ziff. 9, in die Verflüssigunganlage gelangenden Rauchgase mit CO² Anteile bewirkt, und somit die Verflüssigungsanlage als dritte. Kühlstufe unter Kompression die CO² Anteile bei mindest 75° bis 90° C minus, zur Abfüllung verflüssigt. Vor dem Erreichen der Verflüssigungsarilage durchziehen die Rauchgase den Abscheider Fig.13 Ziff. 13. Als zusätziche Sicherheitseinrichtung reagiert eine motorbetriebene Abgaskappe auf Meldung einer Fotozelle sowie weitere übliche Sicherheitseinrichtungenein, wie Sicherheitsventile, thermische Ablaufsicherung udgl. Fig.13Ziff.12b. Die Auspuffgase der Motoren für die Kältemaschinen werden ebenfalls in das System geleitet, Fig. 13, Ziff. 14. Die Kältemaschinen können auch Absorbermaschinen sein.

Die optimierte Solarwärmenutzung durch das Leerlaufsystem, ist aufgrund der Besonderheit des Wassermantels als Wärmetrauscher bis unter Dach dadurch möglich, well die Helzungsanlage mit der Klimaschutzvorrichtung drucklos betrieben werden kann. Der bei Heizungen ansonsten erforderliche Druck von 1,5 bar bis 2,5 bar, dient der Füllung der Heizflächen in den Etagen, weil die Heizungsumwälzpumpen für Füllungen nicht geeignet sind. Sie wälzen gemäß ihrer Bezeichnung das Heizungswasser lediglich im Heizungskreislauf um. Beim Einsatz der Klimaschutzvorrichtung hingegen befinden sich die Heizflächen in der Regel. unter dem Wasserspiegel des Heizwassers in der Klimaschutzanlage, die bis unter Dach reicht .Fig. 16. Somit füllen sich durch den statischen Druck sämtliche Heizflächen automatisch beim Befüllen des Wassermantels der Klimaschutzanlage. Die Solarkollektoren sind mit einem Be-und und Entlüftungventil ausgerüstet.
Die bei thermischen Solaranlagen übliche Solarstatiion beinhaltet eine Temperaturdifferenzregelung die mit Fühler am Kollektor und Fühler am Wärmespeicher des Wassermantels der Klimaschutzorrichtung ausgerüstet ist. Meldet der Fühler vom Kollektor an die Temperaturdifferenzregelung, daß dessen Wassertemperatur tiefer liegt als die Temperatur im Wassermantel, kommt die Solaranlagenpumpe zum Stillstand und gleichsam öffnet sich das Beluftungsventill am Kollektor und bewirkt dessen Entleerung durch Rückfluss des Wassers in den Wassermantel der Klimaschutzvorrichtung. Im umgekehrten Fall der Wärmemeldung am Kollektor, beginnt die Pumpe zu arbeiten und das Belüftungsventil schließt sich. Der Schnellentlüfter, ebenfalls an oberste Stelle der Sotarvorlaufleitung unter Dach, schießt automatisch wenn der Kollektor voll ist. Bei dem Leerlaufsystem ist es nicht erforderlich, das Wasser aus Gründen des Frostschutzes mit den ansonsten üblichen Frostschutzmittel zu versetzen, weil die Kollektoren bei Kälte leer sind.

Klimaschutzvorrichtung als Klimaanlage resp. Raumheizung und Raumkühlung besteht aus den gleichen Komponenten, lediglich kommt bei Anwendung als Raumkühlung anstatt des Heizkessels eine Kältemachine in Anwendung, welche sich Nähe des oberen Teiles des Wassermantels unter Dach befinden kann.. Die Energie wird aus der Thermischen Solaranlage bezogen, teils wird die Absorberkältemaschine mit Gas- oder Elektrizität betrieben. Am Heizungsrücklauf befindet sich eine Eine Muffe mit Dreiwegehahn. Damit wird bei Kühlbedarf der Heizungsrücklauf am Eingang in die Thermoscopanlage gesperrt, dafür aber der Kühlvorlauf der Kältemaschine geöffnet. Somit fließt Kühlflüssigkeit in umgekehrten Durchfluss durch den Wassermantel zum Heizkesselvorlauf am Austritt des unteren Randes, dem Klöpperboden, aus dem Mantelrohr.

An dieser Stelle ist ein Bypass installiert zum Heizkörpervorlauf, welcher bei Kühlbetrieb der Vorlauf in den Kühlflächen, Heizkörper bei Heizbetrieb, ist.. Der Kreislauf wird entweder bei Kühlbetrieb oder bei Heizbetrieb durch die Heizungsumwätzpumpe bewirkt, welche zwischen Heizkesselvorlauf und Heizkörper installietrt ist. Bei Kühlbetrieb fließt das kalte Wasserv als Kühlflüssigkeit durch den Bypass dirket in zur Pumpe ohne Umweg Heizkessel.

Die Regelung ist derart eingestellt, daß bei Temperatur mit Kühlbetarf die Heizungsumwälzpumpe einschaltet, gleichzeitig das Ventil vom Bypass öffnet, Fig.14,2iff. 8 beim gleichzeitigen Schließen des Zuflusses zum Heizkessel, wobei der Vorlauf der Kältemaschine am oberen Eingang des Heizkörperrücklaufes an der obersten Stelle des Wassermantelrohres öffnet, Desweiteren kann jedoch anstelle der Kältemaschine Kälte durch Verdunstung im Rauchrohr zur Übertragung auf das Wasser des Mantelrohres erzeugt werden, mit Einsatz einer auswechselbaren Absorbervorrichtung für Verdunstungenskälte.

### Anwendungsbereiche

Gebäude jeder Art, Industrieanlagen jeder Art, Abfackelanlagen, Kohlekraftwerke, Fig. 12, Verbrennungsmotoren jeder Art für motorbetriebene Fahrzeuge oder motorbetriebene und zu beheizende Fahrzeuge zu Wasser, Luft, oder Land, stationäre Motoren für Wärme-Kraft-Koppelung oder sonstiger Anwendung. Raumkühlung für Gerbäude oder Räume jeder Art.

### Stand der Technik:

Entzieht man herkömmlichen Rauchgasabzügen/Schornsteinen die Wärme des Rauches, versotten sie, werden unbrauchbar. Das beim Warmeentzug enststehende Kondensat, welches Schadstoff-und Wasseranteile enthält, führt zu der zerstörerischen Versottung. Bei Verwendung herkömmlicher Rauchgasabzüge/Schornsteine jeder Art und für jeder Art Zweck ist es somit nicht möglich, diesen die Wärme für Nutzung und zur Schadstoff-und CO² Reduktion, zu entziehen. Abfackelantagen und ähnliche Einrichtungen belasten besonders die Umwelt mit Schadstoffen und CO"-Ausstoß. Hinsichtlich Raumkühlung muß bei herkömmlicher Technik,im Gegensatz zur Erfindung, eine Klimaanlage errichtet werden, die i.d.R. mit Ventilation arbeiten.

Die Verflüssigung der CO²-Anteile aus dem Rauchgas zur Vermeidung des Ausstoßes, setzt die Technik der Erfindung mit Vorkühlung, Rauchgasführung und der vweiteren dargelegte ten Eigenschaften: Fig.1, Fig.2, Fig.3 und 4, Fig.5, Fig.10 und 11, Fig. 12. voraus. Mit den Schornsteinen nach Stand der Technik ist es nich somit möglich die Abwärme aus Rauchgasen zu nutzen und Reduktion der Schadstoffe sowie CO² Ausstoss, effizient zu reduzieren, Brennwertkessel verfügen über die Möglichkeit der Wärmerückgewinnung durch Betreiben im Kondensationsbereich, jedoch eingeschränkt. Beim Brennwortheizkessel wird die Abgaswärme bereits im Heizkessel selbst, nicht im Rauchgasabzug/Schornstein, durch Übertragung der Rauchgaswärme auf nachgeschaltete Wärmetauscher gekühlt.Bei Voll-Lastbetrieb zur kalten Jahreszeit können somit Brennwertkessel nur teilweise im Bereich der Brennwertnützung arbeiten.

Die vorliegend beschriebene Erfindung ist jedoch geeignet im permanenten Brennwertbetrieb mit sämtlichen Brennstoffen betrieben zu werden und ist darüberhinaus eine in jeden Industriebereich einzusetzende Technik für Umwelt-resp. Klimaschutz sowie im Heizungsbereich und bei Einsatz von Blockheitskraftwerken resp. Verbrennungsmotoren jeder Art Anwendungsbereichs. Fig 12, Fig 15.

Thermische Solaranlagen übertragen die Wärme über einen Wärmetauscher an den Speicher. Das Wasser im Solarkreislauf muß mit geeigneten Frostschutzmittel versetzt sein. Die Effizienz ist wegen der Übertragung der Wärme mittels eines Wärmmetauschers gemindert gegenüber dem Leerlaufsystem mit Wärmeübertragung direkt auf das Heizwasser.

Beim Stand der Technik hinsichtlich Anwendungszweck zur Raumkühlung werden dafür i,d.R. Ventilatoren eingesetzt mit Luftumwälzung oder sog.Klimaboxen, die ebenfalls mit Ventilation maschinell gekühlte Luft zur Umwälzen bringen. Mit dieser Technik sind Staub- und Schadstoffverwirbelungen verbunden mit deren gesundheitsschädlichen Auswirikungen, z.B. auch beim Auftreffen kalter Luftströmen auf Hautflächen sowie durch Ventilatiion verwirbelter Staub mit gesundheitsschädlichen Keimen udgl. Es ist Bei der Erfindung hingegen wird die Kühlung nur durch Thermik bewirkt unter Verwendung der i.d.R. bereits vorhandenen Heizkörper, die als Kühlflächen zur Verfügung stehen.

### Kritik des Standes der Technik

Herkömmliche Schornsteine sind Wärmevergeuder und belasten die Umwelt mit Schadstoffen und hohen CO² Ausstoß. Entzieht man dem Schornstein die Wärme, wird er in seiner Funktion bis zur Unbrauchbarkeit durch Versottung beeinträchtigt. Es ist somit nicht möglich das große Wärmepotential bei der Verwendung von Schornsteine, gleich welcher Bauart und Material, nutzbar zu machen und die Umwelt zu schonen. Kommt jedoch anstelle des herkömmlichen Schomsteins die beschriebene Erfindung Klimaschutzvorrichtung die einen Kondensationskatalysator beinhaltet, zum Einsatz an Stelle des Schornsteins, wird die ansonsten verlorene Wärme genutzt und die Schadstoffe mit dem Kondensat entsorgt sowie bis zu 50% Brennstoff weniger verbrannt, was einen CO²-Ausstoss um 50% vermindert und bei Verflüssigung CO² Ausstoß nicht auf kommen lässt.

Der herkömmliche Brennwertheizkessel ist i.d.R. eine gasspezifische Feuerstätte. Vereinzelt wird versucht diese Technik auch für Ölbefeuerung auszulegen. Mit Festbrennstoffbeieuerung ist nicht möglich im Bereich der Brennwertheitzkessel zu betreiben resp, im diesen im Kondensatins bereich zu betreiben wegen der hohenabgastemperaturen. Versuche mit Pelletkessel haben Teilerfolg, ähnlich der gas-oder ölbetriebenen Brennwertkessel im Gegesatz zur beschriebenen Erfindung, die permanent im Brennwertbctrieb mit sämtlichen Brennstoffen betrieben werden kann, weit der gesante Rauchabzug in das Heizung- resp. Wärmeerzeugungsverfahren als wichtiges funktüonselement einbezogen ist im Gegensatz zu jeden bisher bekannten Verbrennungswärmeerzeuger.

### Bezugszeichenliste zur Patentbeschreibung

**Fig 1**
- 1: a Rauchrohr mit Rauchgasklappe (4)
- 1b: Rauchrohr mit Russfilter
- 1c: Abgasmess-Stellen
- 2: Fotozelle-Feinstaubwächter
- 2a: Doppelflansch mit therm Trennung
- 3: Putztürchen
- 4: Motor betriebene Rauchgasklappe
- 5a: Hauptrauchrohr
- 6.: Wassermantelrohr
- 7.: Ventilator
- 8.: Russfilter
- 9.: Anschluss für Elektroheizpatrone
- 10.: Rauchgasanschlüsse für Öfen udgl.
- 12.: Heizungsvorlauf
- 13.: Heizungsrücklauf
- 15.: Kondensatablauf /-entnahme
- 16.: Heizkessetzutauf
- 17.: Thermometer

**Fig. 2**
- 1: KühlungsmantellKühlflüssigkeit
- 1a: Rauchrohr mit Rauchaasklappe (4)
- 1b: Rauchrohr mt Rußfilter
- 1c: Abgasmess-Stellen
- 2: Fotozelle - Feinstaub-/Rußwächter
- 2a: Doppelflansch mit therm.Trennung
- 3: Putztürchen
- 4: motorgetriebeno Rauchgasklappe
- 5: Hauptrauchrohr
- 6: Wassermantelrohr
- 7: Druck-Ventilator
- 8: Rußfilter
- 9: Elektrohcizpatrone
- 10: Rauchgasanschlüsse für Öfen udgl.
- 11: Absorbtionskältemaschine
- 12: Helzungsvorlauf
- 13: Helzungsrücklauf
- 14: oberer Konxdensatablauf
- 15: unterer Koridensataugint mit Ablauf
- 16: Heizkesselzulauf
- 17: Thermometer
- 18: Heizungsumwälzpumpe
- 19: integrierter Wärmearzeuger

**Fig. 3 und 4**
- 1: Kühlungsmantel/Kühlflässigkeit
- 1a: Rauchrohre im Kühlmantel
- 2: Fotozelle/Feinstaub-/Russwächter
- 2a: Doppelflansch mit thermischer Trennung
- 14: oberer Kondensatablauf
- 15a: Kondensationskammer mit konischen Boden
- 20: Vorlauf der Kühlflüssigkeit
- 21: Rücklauf der Kühlflüssigkeit

**Fig. 5**
- 1: KühlflüssigkeitsmantellKühlrrtittel
- 1c: Mess-Stelle Rauchgas
- 2: Fotozelle/Feinstaub-/Russwächter
- 2a: Doppelflansch mit thermischer Trennung
- 3: Putztürchen
- 4: Motor getriebene Rauchgasklappe
- 5: Kondensationskammer mit konischen Bodon und Kühlmittelmantel
- 5a: Hauptrauchrohr
- 6: Wassermantel
- 7: Druck-Ventilator
- 8: Russfilter
- 10: Rauchgasanschluss
- 14: oberer Kondensatablauf
- 15: unterer Kondensatablauf
- 20: Vorlauf Kühlflüssigkeit
- 21: Rücklauf Kühlflüssigkeit

**Fig. 6**
- 5a: Hauptrauchrohr
- 22: Spritzdüse/ Zerstäuber
- 23: Anschlussmuffe für Druckwasser

**Fig. 7 und 8**
- 1: Kühlflüssigkeitsmantel/Kühlmittel
- 1a: Rauchrohre im Kühlmantel
- 1c: Mess-Stelle Rauchgas
- 2: Fotozelle/Feinstaub-/Russwächter
- 5: Kondensationskammer
- 5a: Hauptrauchrohr
- 6: Wassermantelrohr
- 14: oberer Kondensatablauf
- 20: Vorlauf Kühlflüssigkeit
- 21: Rücklauf Kühlflüssigkeit
- 22: Spritzdüsen

**Fig. 9 und 10**
- 3: Putztürchen
- 6: Wassermantelrohr
- 10: Rauchgasanschluss
- 11: Absorberkättemaschine
- 12: Heizkörpervorlauf
- 13: Heizkörperrücklauf
- 16: Helzkesselzulauf
- 17: Thermometer
- 23: CO₂-Verfüssigungsanlage
- 24: Stützrohr
- 25: Vorkühler
- 26: Warmwasserentnahme aus Wärmetauscher

**Fig. 11**
- 1: Kühlflüssigkeitsmantel als Restwärmekühler
- 2a: Doppelflansch mit thermischer Trennung
- 6: Wassermantelrohr
- 11: Absorberkältemaschine
- 11a: Rauchgasabscheider und CO₂-Verlüssigungs- und Abfüllanlage
- 14: oberer Kondensatablauf
- 20: Vorlauf der Kühlflüssigkeit
- 21: Rücklauf der Kühlflüssigkeit

**Fig 12**
- 1: Kühlflüssigkeitsmante/Restwärmekühler
- 1d: Kühlflüssigkeitsmantel für Flammenraum
- 2: Kondensationskammer und Vorkühlung zur CO₂- Verlflüssigung
- 2a: Doppelflansch für therm. Trennung
- 7: Saugventilator
- 8: Rußfilter
- 11: Absorberkäitemaschine oder Sonstige
- 11a: CO₂-Verflüssigungsanlage
- 14: oberer Kondensatablauf
- 15: unterer Kondensatablaf mit Auffang
- 20: Kühlflüssigkeitskreisläufe
- 27: Flammenraum
- 28: Brenner
- 29: Auspuff der Motoren für Kältemaschine
- 30: Rauchgassicherheitsabgang/Ventil mit motorischer Abgasklappe
- 31: Rauchgasabscheider
- 32: Ausgang der Restrückstände

**Fig. 13**
- 6: Mantelrohr
- 11: Absorberkältemaschine
- 20: Kühlflüssigkeitsvorluf
- 21: Kühlflüssigkeitsrücklauf
- 33: Solarkollektoren
- 34: Bypass1
- 34a: Bypass2
- 35: Umwälzpumpe
- 36: Rückflussverhinderer
- 37a: automatischer Dreiwegehahn
- 37b: automatischer Dreiwegehahn
- 37c: automatischer Dreiwegehahn

**Fig. 14**
- 2a: Doppelflansch für therm. Trennung
- 6: Wassermantel
- 5a: Hauptabgasrohr im Kühlwassermantel
- 5b: Abgasauspuffrohr
- 8: Rußfilter
- 14: oberes Kondensatablaufrohr
- 15: unterer Kondensatablauf
- 38: Prallkappe
- 39: Auspuffendstück
- 40: perforiertes Endstück im Kühlwassermantel
- 41: Thermostat
- 42: Kühler
- 43: Kondensatbehälter

**Fig. 15**
- 2: Entlüftungsventil
- 2b: Belüftungsventil
- 6: Wassemanletrohr
- 33: Solarkollektoren
- 44: Solarstation
- 45: Solarvorlauf
- 46: Solarrücklauf
- 47: Solarpumpe
- 48: Speicherfühler 1
- 49: Speicherfühler 2
- 50: Kollektorfühler

## Patentansprüche

**1.** Klimaschutzvorrichtung als Einheit aus abgasführenden Kondensationskatalysator für sämtliche Brennstoffe und Wärmeerzeuger sowie Verbrennungsmotoren jeder Art und jeder Art Kraftstoff, **dadurch gekennzeichnet, dass** ein Abgasrohr mit einem Mantelrohr mit Wasserfüllung umhüllt ist und ein angeflanschtes Mündungsstück thermische Entkoppellung mittels einer zwischen Flanschen liegenden Ringscheibe aus nicht wärmeleitenden und wärmebeständigen Material die thermische Trennung zwischen Abgasrohr im Wassermantel und dem Mündungsstück bewirkt. Weiterhin **dadurch gekennzeichnet, dass** das angeflanschte Mündungsstück mit einem Kühlmantelrohr umgeben sein kann und **dadurch gekennzeichnet, dass** sich nach der thermischen Entkoppelung das Rauchrohr als Mündungsstück in zwei nebeneinander stehende Rauchrohre mit gleich großen oder unterschiedlichen Durchmesser teilt, wobei eines mit einem Knie ( Fig 1, Ziff.5 ) nach oben führt und sich in dem Rauchrohr mit Knie die Kammer für den Rußfilter (Fig.2 Ziff. 8) mit darunterliegendem Aufnahmestutzen für ein Druckventilator (Fig. 2 Ziff. 7) befindet. Weiterhin **dadurch gekennzeichnet, dass** eine Fotozelle (Fig.2 Ziff.2) das Öffnen oder Schließen der im Hauptrauchrohr befindlichen motorisch betriebenen Abgasklappe bewirkt, je nach Aufkommen von Ruß-resp.Feinstaubanteilen, dass die Rauchgase durch das Rohr mit dem Rußfilter mittels des Ventilators abgeführt werden.

**1.** Klimaschutzvorrichtung nach Anspruch 1, jedoch mit hydraulischer Rauchgaswäsche, **dadurch gekennzeichnet, daß** eine Fotozelle das Öffnen oder Schließen eines Magnetventils einer Druckwasserleitung bewirkt, durch welches das Druckwasser in einem horizontal quer im oberen Teil des Hauptrohres verlaufenden Sprühvorrichtung gelangt, wobei Ruß- und Feinstaubanteile im Rauchrohr zum unterem Kondensatauffang mit Ablauf zur Entsorgung gespühlt werden.(Fig.6, Fig.7, Fig. 8)

**1.** Klimaschutzvorrichtung nach Anspruch 1 mit Kondensationswärmenutzung als gleichzeitiger Brennwertwärmetauscher, **dadurch gekennzeichnet, daß** der Wärmeerzeuger vertikal oder horizontal integriert sein kann und für sämtliche Brennstoffe ausgelegt ist sowie als gleichzeitiger Teil des Heizungsrücklaufes im Gegenstrom zum thermischen Auftrieb die Rücklauftemperatur aufwertet die sowie integrierte Warmwasserbereitung im Durchflußerhitzungsverfahren bereitet.und **dadurch gekennzeichnet, dass** sich am unterem Ende des Wassermantellrohres eine Verdickung befindet, welche als Brennraum mit Brennkammer und inneren Rauchzügen ausgestaltet ist sowie die Verdickung als Teil des Wassermantelrohres ist, welches mit dem Mantelrohr und dem iim Mantelrohr befindlichen Rauchrohr verschweißt oder mit Flanschen mit dem Mantelrohr verbunden ist, **dadurch gekennzeichnet**, das die Verdickung als Wärmeerzeuger horizontal oder vertikal ausgelegt sein kann sowie als sog. Wärmeschrank, **dadurch gekennzeichnet** das sie mit Anschlussflansch ausgestattet sein kann zum Anschluss an herkömmliche Schornsteine oder an die Klimaschutzvorrichtung nach Anspruch 1. (Fig. 2)

**2.** Klimaschutzvorrichtung nach Anspruch 1 und Anspruch 2, **dadurch gekennzeichnet, dass** das entkoppelten Mündungsstück als Doppelmantelrohr ausgelegt sein kann für Aufnahme maschinell erzeugter Kälte für Kühlflüssigkeit und **dadurch** gekennzeichet, daß das thermisch entkoppelte Doppelmantelrohr als Mündungsstück eine abgeteilte Kondensationskammer mit Kondensatablauf beinhaltet und die Kühlflüssigkeitsummantelung von einem oder mehreren Rauchrohrmündungen durchzogen sein kann. (Fig. 2 Ziff.1, Fig 5, Fig.7, Fig..8)

**2.** Klimaschutzvorrichtungnach Anspruch Anspruch 3, **dadurch gekennzeichnet, daß** eine CO² Verflüssigungsanlage sowie ein Rauchgasabscheider dem Mündungsstück nachgeschaltet sind (Fig. 9 ,Fig. 10)

**2.** Klimaschutzvorrichtung nach Anspruch 1 bis 4, **dadurch gekennzeichnet, daß** die Klimaschutzvorrichtung mit ein oder mehreren Rauchgasanschlüssen mit oder ohne Wasser manteldurchdrungung ausgerüstet sein kann und **dadurch gekennzeichnet, daß** der Heizflächenrücklauf im Gegenstromverfahren die Wasserummantelung des Rauchrohres von oben nach unten zum Heizkesselrücklauf durchfließt. (Fig.1 Fig 2)

**3.** Klimaschutzvorrichtung nach Anspruch 1 bis 5 , **dadurch gekennzeichnet, daß** die Klimaschutzvorrichtung als Brennwertgerät mit Betrieb von Öfen, Festbrennstoff-Feuerstätten, oder Feuerstätten jeder Art Brennstoff für Beheizungen oder jeden anderen Zwecks, wie Abfackelanlagen und Wärmeerzeugung jeden anderen Zwecks ausgelegt ist und **dadurch gekennzeichnet**, Wärme aus Verbrennungen und Abgase von einem odere mehreren Rauchgasrohren oder Rauchgasrohre und Brennkammern auf ein geeignetes Medium für Nutzwecke zu übertragen (Fig. 11. Fig.12)

**3.** Klimaschutzanlage nach Anspruch 1 bis 5 jedoch **dadurch gekennzeichnet, daß** thermische Solarkollektoren angeschlossen sind mit Leerlauftechnik durch Ansteuerung eines Belüftungsventils durch die Temperaturdifferenzregelung und automatischer Befüllung. Weiterhin **dadurch gekennzeichnet, daß** die Solarflüssigkeit zum Heizungskreislauf gehört.(Fig.15)

**3.** Klimaschutzvorrichtung nach Anspruch 2 jedoch für Verbrennungsmotoren jeder Art Motor und Kraftstoff im mobilen Einsatz für Fahrzeuge zu Wasser, Land und Luft und stationären Einsatz, **dadurch gekennzeichnet, daß** die Klimaschutzvorrichtung im wasserummantelten, abgasführenden Rechteckohr aus versetzt verschweißten Rechteckrohrstücken und die Mündung aus einem Abgasrohrenstück aus Rundrohr besteht, welches von einem zur Mündung hin offenen Rohr umhüllt ist. Weiterhin **dadurch gekennzeichnet, daß** das Abgasrohr an seiner Mündung mit einer Prallkappe ausgerüstet ist, welcher die Auspuffgase umlenkt in das umhüllende Doppelrohr, wodurch dier Kondensatablauf in das Doppelrohr zum Kondensatauffang abläuft, die Auspuffgase aber nach oben an allen Seiten der Prallkappe vorbei ins Freie gelangen. Klimaschutzvorrichtung nach Anspruch 2 und 8, jedoch mit kühlflüssigkeitummantelten abgasführende runden, rechteckigen oder quatratischen Rohr, wobei die Anordnung der Klimavorrichtung horizontal oder vertikal verlaufen kann, mit maschineller oder thermischer Kühlung und **dadurch gekennzeichnet, daß** die Klimaschutzvorrichtung mit Kondensatablauf und Auffang und einen Flansch mit thermischer Trennung ausgerüstet ist.(Fig.14)

**4.** Klimaschutzvorrichtung nach Anspruch 1 bis 8 **dadurch gekennzeichnet, dass** sich am Wassermantelrohr Muffen- oder Rohrnippel-Anschlüsse befinden können zum Anschluß thermischer Wärmequellen jeder Art sowie Anschlüsse für Elektro-Heizpatronen resp. Anschlüsse energetischer Wärmequellen, jeder Art von Wärmespeicher und **dadurch gekennzeichnet, daß** sich im Wassermantelrohr ein seperater Kreislauf in Röhrenbündelwärmetauscher aus Viereckrohr für Warmwasserbereitung im Durchflusserhitzungsverfahren befinden sowie ein Anschluss für Abluft von Wäschetrocknern eingeschweißt ist (Fig.1,Fig 2) sowie **dadurch gekennzeichnet, dass** eine Absorberkältemaschine bei Bedarf den Heizungskreislauf und Heizflächen für Kühlzwecke als Kühlungskreislauf für Raumkühlung nutzt und **dadurch gekennzeichnet, dass** die Absorberkühlmaschine als Primärenergie die Sonnenwärme oder sonstiger für Absorberkältemaschinen geeigneter Energiequellen nutzt.und die durch Verdunstung entstehende Kälte auf das Wasser im Mantelrohr zur Verteilung auf die Kühlflächen für Raumkühlung, wofür die für Heizung vorhandenen Heizflächen genutzt wird.(Fig.13)
